# EUROPEAN PATENT APPLICATION

(11) **EP 1 216 614 A2**
(43) Date of publication of application: **26.06.2002**
(21) Application number: 01310726.3
(22) Date of filing: 20.12.2001
(51) Int. Cl.: A01K 27/00

(54) **Canine halter**

(30) Priority: 21.12.2000 GB 0031283
(71) Applicant: The Company of Animals Limited, Chertsey, Surrey KT16 9NL (GB)
(72) Inventor: Mugford, Vivienne, Chertsey, Surrey KT16 9NL (GB)
(74) Representative: Marlow, Nicholas Simon

(57) **Abstract**

A dog halter comprises a nose loop 12, a neck loop 14 and opposed cheek straps 16 joining the nose loop to the neck loop, the neck loop passing through a loop 28 in each cheek strap and being folded 34 where it passes through the said loops to define an lower neck loop portion 14' and a upper neck loop portion 14" such that the angle θ subtended between the lower neck loop portion and the upper neck loop portion is between 80° and 160°, each fold lying at least partly in the loop of a respective cheek strap.

## Description

The invention relates to halters for animals, such as dogs. It provides a halter which is particularly effective to control dogs and other animals.

A known dog halter sold by The Company of Animals under the Registered Trade Mark HALTI comprises a nose loop and a neck loop joined by opposed cheek straps and a throat strap. The throat strap extends from the bottom of the neck loop and ends in a cinch ring through which the nose loop passes. A ring passes around the bottom of the neck loop for attachment of a lead. The cheek straps are sewn to opposed sides of the nose loop and are each joined to the neck loop by a ring, to which upper and lower sections of the neck loop are attached. This allows the upper section of the neck loop to move relative to the cheek straps and the lower section of the neck loop. The upper portion of the neck loop has an adjustable buckle or clip to allow the halter to be easily placed in a dog's head, with the nose loop passing over the dog's nose and the neck loop around its neck, behind its ears. A lead is attached to the ring around the nose loop.

In use, if the dog pulls away from its walker, the nose loop of the halter pulls the dog's nose around to the left or right, which naturally causes the dog to slow down or stop. Over time, this action discourages the dog from pulling away and it learns to walk in an orderly way without suffering any discomfort.

It has now been found that if the angle between the upper and lower portions of the neck loop is between 80° and 160°, the control exerted on the dog is significantly improved.
According to the invention there is provided an animal halter comprising a nose loop, a neck loop and opposed cheek straps joining the nose loop to the neck loop, characterised in that the neck loop passes through a loop in each cheek strap and is folded where it passes through the said loops to define an upper neck loop portion and a lower neck loop portion such that the angle ⊖ subtended between the lower neck loop portion and the upper neck loop portion is between 80° and 160° and in each said folds lie at least partly in the loop of a respective cheek strap.

The invention will be further described by way of example with reference to the accompanying drawings, in which:

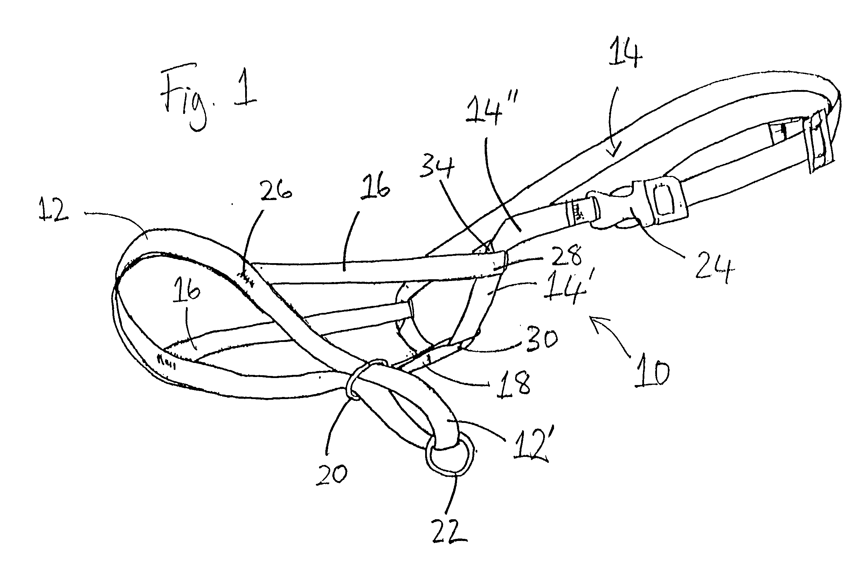

Figure 1 is a perspective view of a halter according to a first preferred embodiment of the invention;

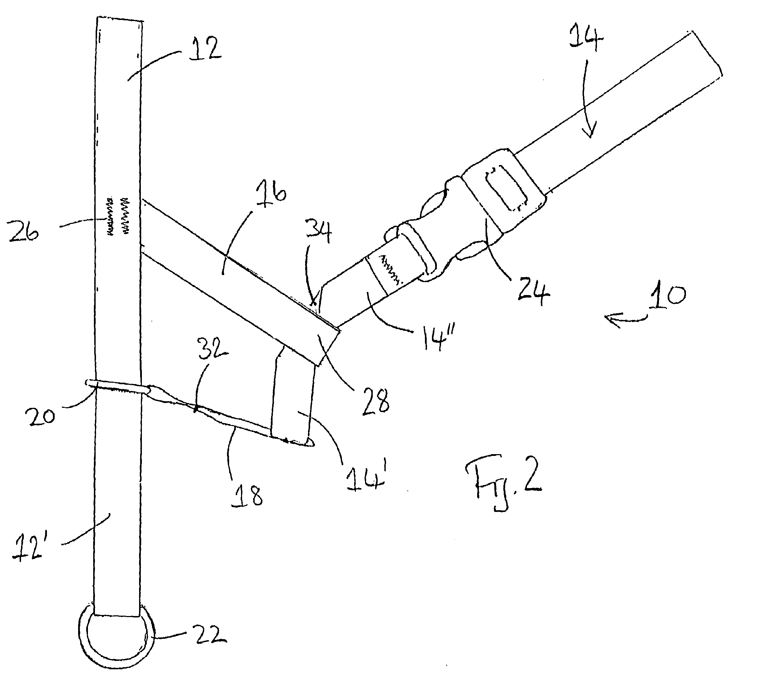

Figure 2 is a side elevation of the halter of Figure 1;
Figure 3 is an enlarged view of a part of the halter of Figures 1 and 2.

The halter 10 of the figures is made of nylon webbing and is particularly suitable for a dog. It comprises a nose loop 12 and a neck loop 14 joined by opposed cheek straps 16. A troat strap 18 extends from the bottom of the neck loop 14 and ends in a cinch ring 20 through which a portion 12' of the nose loop passes; a lead ring 22 is around the portion 12' of the nose loop which passes through the cinch ring 20 for attachment of a lead. An adjustable buckle 24 is provided in the neck loop 14 to allow the halter to be placed around and removed from a dog's head. The upper section of the nose loop 12 is a double thickness of webbing.

The cheek straps 16 are attached to opposed sides of the nose loop 12 by stitching 26. The other end of each cheek strap 16 is doubled back on itself and stitched to form a cheek strap loop 28 through which the neck loop 14 passes. The neck loop portion below the cheek straps 16 is the lower neck loop portion 14' and that above the cheek straps the upper neck loop portion 14". The throat strap 18 is a loop of webbing to which the cinch ring 20 is attached at one end and through which the lower neck loop portion 14' passes. The neck loop is stitched 30 to the throat strap 18, and the webbing loop forming the throat strap is stitched together 32 in the middle of the throat strap to keep the cinch ring 20 separate from the neck loop 14.

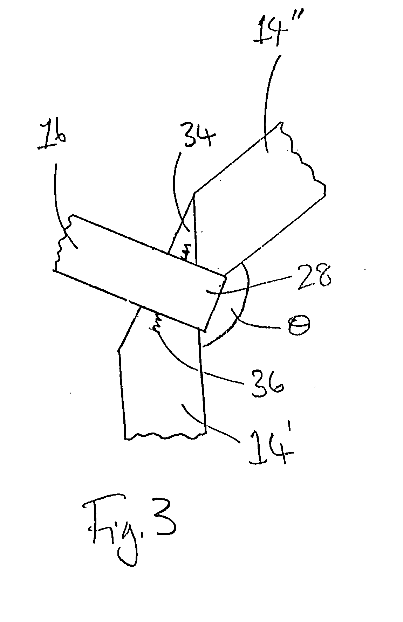

As is best seen in Figure 3, the neck loop 14 is folded 34 across itself within the loop 28 at the end of the lower portion 14', so that the angle ⊖ subtended between each cheek strap loop 16 and the upper portion 14" of the neck loop is 124°. The upper portion 14" of the neck loop lies inside the lower portion 14', and the upper and lower parts are stitched 36 together at the fold 34. The fold protrudes above and below the cheek strap loop 28. It will be well understood that the arrangement is the same in both cheek strap loops 28.

The stitched fold 34 holds the angle ⊖ between the lower portion 14' and the upper portion 14" of the neck loop.

It has been found that by setting the angle ⊖ between the lower and upper portions of the neck loop to between 80°, preferably 85°, more preferably 90°, and 160°, better control can be exercised on dogs wearing a halter of the invention than with conventional halters.

## Claims

1. An animal halter (10) comprising a nose loop (12), a neck loop (14) and opposed cheek straps (16) joining the nose loop to the neck loop, **characterised in that** the neck loop (14) passes through a loop (28) in each cheek strap (16) and is folded (34) where it passes through the said loops (28)to define an upper neck loop portion (14") and a lower neck loop portion (14') such that the angle ⊖ subtended between the lower neck loop portion (14') and the upper neck loop portion (14") is between 80° and 160° and **in that** each said fold (34) lies at least partly in the loop (28) of a respective cheek strap (16).

2. A halter (10) according to claim 1 in which the angle ⊖ is about 124°.

3. A halter (10) according to any claim 1 or 2 further comprising a throat strap (18) extending from the neck loop (14) and cinching the nose loop (12).

4. A halter (10) according to any preceding claim for a dog.
